# EUROPEAN PATENT APPLICATION

(11) **EP 4 734 354 A1**
(43) Date of publication of application: **29.04.2026**
(21) Application number: 25210941.8
(22) Date of filing: 24.10.2025
(51) Int. Cl.: H02P 6/182

(54) **DEVICE AND METHOD FOR CONTROLLING OF MOTOR WITH PHASE WINDINGS IN FLOATING STATE**

(30) Priority: 25.10.2024 KR 20240147348
(71) Applicant: LX Semicon Co., Ltd., Daejeon 34027 (KR)
(72) Inventor: HA, Jae Hyun, 34027 Daejeon (KR); MIN, Chol, 34027 Daejeon (KR); CHOI, Jong Tae, 34027 Daejeon (KR)
(74) Representative: Goddar, Heinz J.

(57) **Abstract**

Disclosed are a device and a method for controlling floating of a motor. The device for controlling floating of a motor includes a speed calculator configured to determine whether a speed of the motor is equal to or higher than a set speed; and a detector configured to measure a back electromotive force by floating a phase voltage of the motor when the speed of the motor is equal to or higher than the set speed, and determine whether a zero-cross point of the back electromotive force and a zero-cross point of a phase current of the motor coincide with each other, in which the speed calculator is configured to release the floating of the phase voltage of the motor and drive the motor when the zero-cross point of the back electromotive force and the zero-cross point of the phase current of the motor coincide with each other. Therefore, there are scarcely torque ripples and noise is low.

## Description

### BACKGROUND

### Field

An embodiment relates to a device and a method for controlling floating of a motor.

### Discussion of Related Art

Recently, in an electronic apparatus including an appliance such as a washing machine or a drying machine, a brushless direct current (BLDC) motor that does not use a brush for rectification to have high energy efficiency is used.

A general method for controlling such a BLDC motor is a feedback control method for performing control such that an output value that is output when the motor is actually driven follows a command value that is input to control the driving of the motor.

In the feedback control method as described above, because the output value is made to follow the command value by simply changing the torque or speed of the motor in a state in which a load applied to the motor is not known, the accuracy of BLDC motor control may be reduced.

Then, while the phase voltage should be floated to check phase delay, floating may cause current ripples and noise may be highly likely to occur.

Further, because a maximum value of a current is used, when a maximum value is similar, calculation may be performed on the basis of a wrong reference.

In addition, because a negative current of a direct current should be measured, a PWM off interval is very short in the case of driving at a high speed, and a problem of ADC (Analog-to-Digital Converter) performance may occur.

### SUMMARY

An embodiment provides a device and a method for controlling floating of a motor that utilizes the floating of a phase voltage of the motor only for a brief moment to achieve minimal torque ripple and low noise.

An embodiment provides a device and a method for controlling floating of a motor that prevent ADC performance problems from occurring by checking only a zero-cross point of a phase current of the motor when determining phase delay based on a phase difference between voltage and current.

The problems of the present disclosure are not limited to those described above, and other problems not described will be clearly understood by those skilled in the art from the following description.

A device for controlling floating of a motor according to an aspect of the present disclosure includes a speed calculator configured to determine whether a speed of the motor is equal to or higher than a set speed; and a detector configured to measure a back electromotive force by floating a phase voltage of the motor when the speed of the motor is equal to or higher than the set speed and determine whether a zero-cross point of the back electromotive force and a zero-cross point of a phase current of the motor coincide with each other, in which the speed calculator is configured to release the floating of the phase voltage of the motor and drive the motor when the zero-cross point of the back electromotive force and the zero-cross point of the phase current of the motor coincide with each other.

The device may further include a PWM signal generator configured to check a current speed of the motor and a position of a rotor on the basis of a back electromotive force measured by floating at a zero-cross point of the phase current of the motor and increase or decrease the speed of the motor.

The detector may be configured to determine whether a speed command of the motor is changed or whether a difference between a point at which a phase angle of the phase voltage of the motor is 0° and the zero-cross point of the phase current of the motor is equal to or greater than a set value, and when the speed command of the motor is changed or when the difference between the point at which the phase angle of the phase voltage of the motor is 0° and the zero-cross point of the phase current of the motor is equal to or greater than the set value, measure the back electromotive force by floating at the zero-cross point of the phase current of the motor, the PWM signal generator may be configured to determine whether a pulse width modulation duty of the motor is a maximum value, and the detector may be configured to reduce an error between the zero-cross point of the back electromotive force and the zero-cross point of the phase current of the motor through a phase lead operation in a voltage cycle on the basis of a lead angle of the motor when the pulse width modulation duty of the motor is the maximum value.

The detector may be configured to measure the back electromotive force by floating the phase voltage of the motor after the speed calculator increases the speed of the motor when the zero-cross point of the back electromotive force and the zero-cross point of the phase current of the motor do not coincide with each other.

The PWM signal generator may be configured to control a duty ratio and a frequency of a pulse width modulation (PWM) signal for the motor, thereby increase or decrease a rotation speed of the motor.

A method for controlling floating of a motor according to an aspect of the present disclosure includes, by a speed calculator, determining whether a speed of the motor is equal to or higher than a set speed; by a detector, measuring a back electromotive force by floating a phase voltage of the motor when the speed of the motor is equal to or higher than the set speed; by the detector, determining whether a zero-cross point of the back electromotive force and a zero-cross point of a phase current of the motor coincide with each other; and, by the speed calculator, releasing the floating of the phase voltage of the motor and driving the motor when the zero-cross point of the back electromotive force and the zero-cross point of the phase current of the motor coincide with each other. The method disclosed herein may implement any one, some or all of the features of the device disclosed herein. Also, the device may be configured to implement any one, some or all of the features of the method disclosed herein.

The method may further include, by the detector, determining whether a speed command of the motor is changed or whether a difference between a point at which a phase angle of the phase voltage of the motor is 0° and the zero-current point of the phase current of the motor is equal to or greater than a set value; by the detector, measuring a back electromotive force by floating at a zero-cross point of the phase current of the motor when the speed command of the motor is changed or when the difference between the point at which the phase angle of the phase voltage of the motor is 0° and the zero-cross point of the phase current of the motor is equal to or greater than the set value; by a PWM signal generator, checking a current speed of the motor and a position of a rotor on the basis of the measured back electromotive force and increasing or decreasing the speed of the motor; by the PWM signal generator, determining whether a pulse width modulation duty of the motor is a maximum value; and, by the detector, reducing an error between the zero-cross point of the back electromotive force and the zero-cross point of the phase current of the motor through a phase lead operation in a voltage cycle on the basis of a lead angle of the motor when the pulse width modulation duty of the motor is the maximum value.

The method may further include, by the detector, determining whether the zero-cross point of the back electromotive force and the zero-cross point of the phase current of the motor coincide with each other; and, by the speed calculator, releasing the floating of the phase voltage of the motor and driving the motor when the zero-cross point of the back electromotive force and the zero-cross point of the phase current of the motor coincide with each other.

The method may further include, by the speed calculator, increasing the speed of the motor when the zero-cross point of the back electromotive force and the zero-cross point of the phase current of the motor do not coincide with each other; and, by the detector, measuring the back electromotive force by floating the phase voltage of the motor.

The method may further controlling, by a PWM signal generator, a duty ratio and a frequency of a pulse width modulation (PWM) signal for driving the motor, thereby increasing or decreasing a rotation speed of the motor.

According to the embodiments, the phase voltage of the motor is floated and the floating control is used only for a brief moment, thereby achieving minimal torque ripples and low noise.

According to the embodiments, only the zero-cross point of the phase current of the motor is checked in determining phase delay based on a phase difference of a voltage and a current, thereby preventing ADC performance problems.

The effects of the present disclosure are not limited to the effects described above, and other effects not described will be understood by those skilled in the art from the following description and the appended claims.

### BRIEF DESCRIPTION OF THE DRAWINGS

The above and other objects, features, and advantages of the present disclosure will become more apparent to those of ordinary skill in the art by describing exemplary embodiments thereof in detail with reference to the attached drawings, in which:
FIG. 1 is a configuration diagram of a motor driving device according to an embodiment of the present disclosure;
FIG. 2 is a diagram illustrating a circuit configuration of the motor driving device according to the embodiment of the present disclosure;
FIG. 3 is a configuration diagram specifically illustrating a configuration of the motor driving device according to the present disclosure;
FIGS. 4 and 5 are diagrams illustrating a zero cross delay value of a phase current relative to a phase of a phase voltage according to the embodiment of the present disclosure;
FIG. 6 is a graph illustrating reduction in error between a zero-cross point of a back electromotive force and a zero-cross point of a phase current of a motor through a phase lead operation in a voltage cycle on the basis of a lead angle of the motor according to the embodiment of the present disclosure;
FIG. 7 is a graph illustrating phase delay after reduction in error between the zero-cross point of the back electromotive force and the zero-cross point of the phase current of the motor according to the embodiment of the present disclosure; and
FIG. 8 is a flowchart illustrating a method for controlling floating of a motor according to the embodiment of the present disclosure.

### DETAILED DESCRIPTION OF EXEMPLARY EMBODIMENTS

The advantages and features of the present disclosure, and methods of achieving them will be apparent from the embodiments described below in conjunction with the accompanying drawings. However, the present disclosure is not limited to the embodiments disclosed herein and may be implemented in many different forms. The embodiments are provided to make the disclosure of the present disclosure complete and to allow those skilled in the art to fully understand the scope of the present disclosure, and the present disclosure is defined only within the scope of the appended claims.

The shapes, sizes, proportions, angles, numbers and the like shown in the accompanying drawings for the purpose of illustrating the embodiments of the present disclosure are merely examples, and the present disclosure is not limited thereto. Identical reference numerals designate identical components throughout the description. Further, in describing the present disclosure, detailed descriptions of known related technologies may be omitted if it is considered to unnecessarily obscure the gist of the present disclosure. The terms such as "including," "having," and "consisting of" used herein are generally intended to allow other components to be added unless the terms are used with the term "only." References to components of a singular noun include the plural of that noun, unless specifically stated otherwise.

In the interpretation of components, they are construed to include margins of error, even if not explicitly stated.

When describing a positional relationship, for example, "on," "above," "below," or "next to" describes the positional relationship of two parts, one or more other parts may be located between the two parts, unless "immediately" or "directly" is used.

When describing a temporal contextual relationship is described, for example, such as "after," "following," "next to," or "before," it may also include non-contiguous cases unless "immediately" or "directly" is used.

As used herein, the term "part" may refer to a unit that processes at least one function or operation, such as a software or hardware component. The functions provided by the "part" may be performed separately by multiple components, or it may be integrated with other additional components. In this specification, the "part" may be implemented in a single circuit or in a plurality of circuits, or in a single device or in a plurality of devices.

Each of the features of various embodiments described herein may be coupled or combined with one another in whole or in part, and may be technologically interlocked and operated in various ways, and each of the embodiments may be carried out independently or in conjunction with one another.

Hereinafter, various embodiments of the present disclosure will be described in detail with reference to the accompanying drawings.

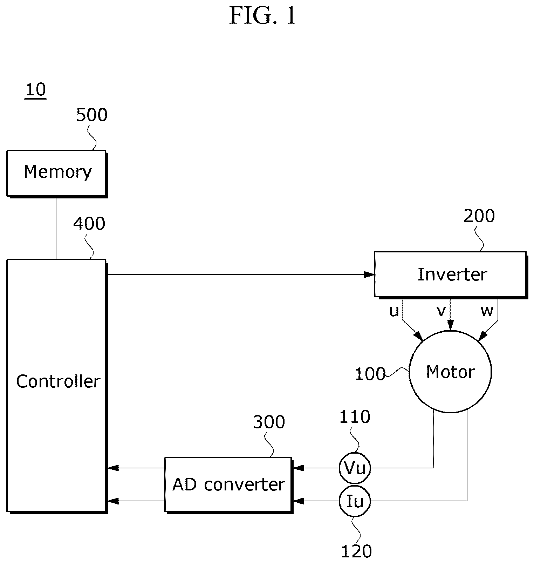

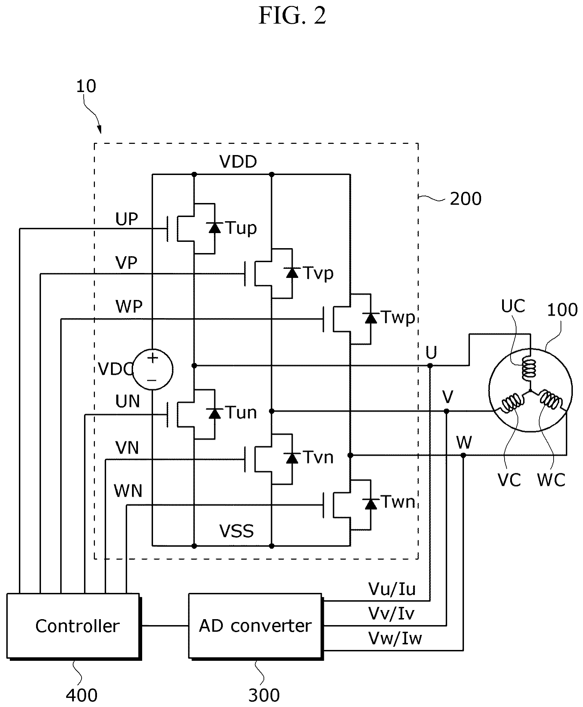

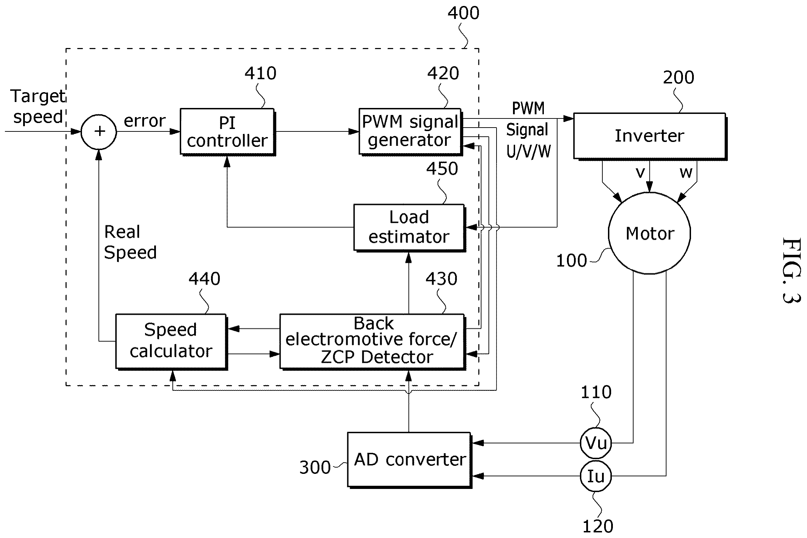

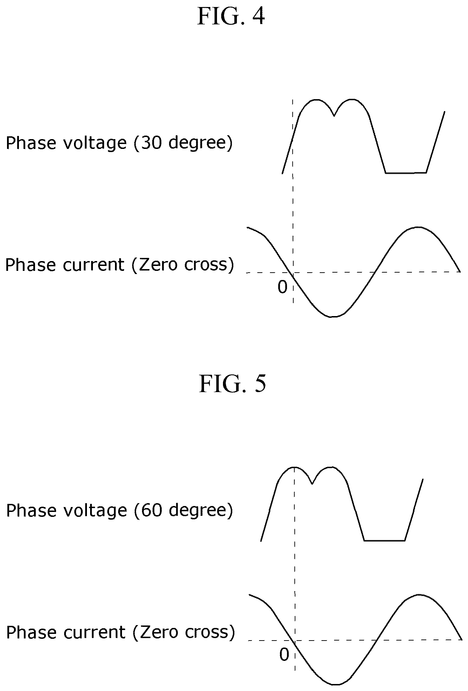

FIG. 1 is a configuration diagram of a motor driving device according to an embodiment of the present disclosure, and FIG. 2 is a diagram illustrating a circuit configuration of the motor driving device according to the embodiment of the present disclosure. FIG. 3 is a configuration diagram specifically illustrating a configuration of the motor driving device according to the embodiment of the present disclosure. FIGS. 4 and 5 are diagrams illustrating a zero-cross delay value of a phase current relative to a phase of a phase voltage according to the embodiment of the present disclosure.

Referring to FIG. 1, a motor driving device 10 may include driving circuit blocks 200, 300, 400, and 500 for driving a motor 100. As an example, the motor driving device 10 may drive a sensor-less BLDC motor 100.

The motor driving device 10 may include an inverter 200 that transfers a driving voltage to the motor 100, a voltage sensor 110 that senses a phase voltage Vu output from the motor 100, a current sensor 120 that senses a phase current Iu output from the motor 100, and a controller 400 that controls the inverter 200 to drive the motor 100.

In the embodiment, for convenience of description, a case where the voltage sensor 110 senses a U-phase phase voltage, and the current sensor 120 senses a U-phase phase current will be described; however, the embodiment is not limited thereto, the voltage sensor 110 and the current sensor 120 may sensor a V-phase or W-phase phase voltage and phase current. The voltage sensor 110 and the current sensor 120 may be simply expressed as sensors 110 and 120.

A memory 500 may be connected to the controller 400. The memory 500 may be provided outside the controller 400. The memory 500 may be embedded in a semiconductor chip such as a micro controller unit (MCU) or a motor driver IC along with the controller 400. The motor driving device 10 may be an MCU or a motor driver IC.

The memory 500 may be implemented as an electrically erasable and programmable read only memory (EEPROM).

In the embodiment, the motor 100 may include a stator including a three-phase coil UC, VC, and WC with different phases and a rotor using a permanent magnet as in FIG. 2.

The stator of the motor 100 may include a first coil UC having a U-phase, a second coil VC having a V-phase, and a third coil WC having a W-phase. The motor 100 may be driven according to the driving voltage supplied from the inverter 200 to each coil of the three-phase coil UC, VC, and WC. In this case, magnetic forces generated by the first to third coils UC, VC, and WC may rotate the rotor of the motor 100.

The inverter 200 generates the driving voltage according to a PWM signal for controlling the driving of the motor 100 and supplies the driving voltage to the motor 100.

Specifically, the inverter 200 may supply a first driving voltage VDD or may supply a second driving voltage VSS to the three-phase coil UC, VC, and WC of the motor 100 via first to third phases U, V, and W under the control of the controller 400. The inverter 200 may float the coil without supplying the first and second driving voltages VDD and VSS.

The inverter 200 receives the first driving voltage VDD and the second driving voltage from a power supply VDC. The inverter 200 may receive first-first and first-second and first-second pulse width modulation (PWM) signals UP and UN, second-first and second-second PWM signals VP and VN, and third-first and third-second PWM signals WP and WN from the controller 400.

The inverter 200 may include a first pull-up transistor Tup and a first pull-down transistor Tun connected in series between a supply line of the first driving voltage VDD and a supply line of the second driving voltage VSS for driving the first coil UC of the motor 100.

The inverter 200 may include a second pull-up transistor Tvp and a second pull-down transistor Tvn connected in series between the supply line of the first driving voltage VDD and the supply line of the second driving voltage VSS for driving the second coil VC of the motor 100.

The inverter 200 may include a third pull-up transistor Twp and a third pull-down transistor Twn connected in series between the supply line of the first driving voltage VDD and the supply line of the second driving voltage VSS for driving the third coil WC of the motor 100.

The controller 400 may sense the phase voltage and the phase current of the motor 100 through the sensors 110 and 120. In this case, the phase voltage and the phase current (for example, Vu/Iu) sensed by the sensors 110 and 120 may be converted into digital signals through an AD converter 300 and input to the controller 400.

When a user drives an electronic apparatus in which the motor 100 is mounted, for example, an appliance, the controller 400 may generate a PWM signal according to a target speed (in FIG. 3, Target speed) set by a user's command.

In other words, when the user sets a driving stage number (operation level) of the electronic apparatus or an upper-level control stage automatically sets a driving stage number and the electronic apparatus is driven, the controller 400 may generate a PWM signal according to a target speed corresponding to the operation level. The controller 400 may transfer the PWM signal to the inverter 200. Here, the appliance may be a washing machine, a drying machine, or the like including the BLDC motor 100.

In the embodiment, the controller 400 may calculate a zero-cross delay value of a phase current relative to a phase of a phase voltage using a phase of the phase voltage and a zero-cross point of the phase current sensed by the sensors 110 and 120. Here, the controller 400 may calculate the zero-cross delay value of the phase current using the phase of the phase voltage and the zero-cross point of the phase current when a real speed of the motor 100 reaches the target speed.

The controller 400 may determine an amount of load applied to the motor 100 using the zero cross delay value and a duty ratio of the PWM signal.

The controller 400 may have a configuration as in FIG. 3.

Referring to FIG. 3, the controller 400 may include a proportional-integral (PI) controller 410, a PWM signal generator 420, a detector 430, a speed calculator 440, and a load estimator 450.

The PI controller 410 may check a difference (error) between the target speed 'Target speed' and a real speed 'Real speed', and may generate a motor speed adjustment value for adjusting a motor speed such that the target speed and the real speed are the same.

The PI controller 410 may generate a lead angle adjustment value for making a phase of the back electromotive force detected by the detector 430 described below and a phase of the phase current the same.

The PI controller 410 may generate a PI control value including the motor speed adjustment value and the lead angle adjustment value and transmit the PI control value to the PWM signal generator 420.

The PWM signal generator 420 may determine a PWM duty ratio according to the PI control value and generate a PWM signal having the PWM duty ratio.

The PWM signal generator 420 checks a current speed of the motor and a position of the rotor on the basis of a back electromotive force measured by floating at a zero-cross point of the phase current of the motor, and increases or decreases the speed of the motor accordingly.

The PWM signal generator 420 determines whether a pulse width modulation duty of the motor is a maximum value.

The PWM signal generator 420 controls the pulse width modulation duty and frequency of the motor to increase or decrease the speed.

The detector 400 may detect a back electromotive force of a certain coil generated in the motor 100.

The detector 400 may detect a zero-cross point of the phase current. Here, the zero-cross point may mean a point at which a phase current of a certain coil is zero as in FIG. 4 or 5. The back electromotive force may be detected at the zero-cross point of the phase current in a state in which the certain coil is floated.

In the embodiment, the detector 430 may transfer the zero-cross point of the phase current to the load estimator 450, and may transfer the back electromotive force to the speed calculator 440.

The detector 430 may receive the phase voltage from the AD converter 300 and may transfer the phase voltage to the load estimator 450.

The detector 430 measures a back electromotive force by floating the phase voltage of the motor when the speed of the motor is equal to or higher than a set speed. Here, the set speed is not limited to a certain speed.

The detector 430 determines whether the zero-cross point of the back electromotive force and the zero-cross point of the phase current of the motor coincide with each other.

The detector 430 determines whether a speed command of the motor is changed or whether a difference between a point at which a phase angle of the phase voltage of the motor is 0° and the zero-cross point of the phase current of the motor is equal to or greater than a set value. This is because determination is made that a load is changed or there is an influence of external factors.

The detector 430 reduces an error between the zero-cross point of the back electromotive force and the zero-cross point of the phase current of the motor through a phase lead operation in a voltage cycle on the basis of a lead angle of the motor when the pulse width modulation duty of the motor is a maximum value.

The detector 430 measures the back electromotive force by floating at the zero-cross point of the phase current of the motor when the speed command of the motor is changed or when the difference between the point at which the phase angle of the phase voltage of the motor is 0° and the zero-cross point of the phase current of the motor is equal to or greater than the set value. The floating at the zero-cross point of the phase current of the motor minimizes the torque ripple of the motor.

The speed calculator 440 may calculate the real speed of the motor 100 using the back electromotive force. Here, the back electromotive force and the real speed of the motor 100 may be in a proportional relationship.

The speed calculator 440 drives the motor in an open loop and determines whether the speed of the motor is equal to or higher than the set speed. Here, the set speed is not limited to a certain speed.

The speed calculator 440 releases the floating of the phase voltage of the motor and drives the motor when the zero-cross point of the back electromotive force and the zero-cross point of the phase current of the motor coincide with each other.

When the zero-cross point of the back electromotive force and the zero-cross point of the phase current of the motor do not coincide with each other, the speed calculator 440 increases the speed of the motor, and then, the detector measures the back electromotive force by floating the phase voltage of the motor.

The load estimator 450 may receive the phase voltage from the detector 430.

The load estimator 450 may also receive the zero-cross point of the phase current.

The load estimator 450 may check the duty ratio of the PWM signal generated by the PWM signal generator 420.

With this, the load estimator 450 may calculate a zero cross delay value of the phase current relative to the phase of the phase voltage using the phase of the phase voltage and the zero-cross point of the phase current. Here, the load estimator 450 may calculate the zero cross delay value of the phase current using the phase of the phase voltage and the zero-cross point of the phase current when the real speed of the motor 100 reaches the target speed.

Specifically, the load estimator 450 may calculate the zero cross delay value by counting from a point at which the phase of the phase voltage is 30° to the zero-cross point of the phase current in a state in which the real speed of the motor 100 reaches the target speed.

For example, when the point at which the phase voltage is 30° and the zero-cross point of the phase current are the same as in FIG. 4, the load estimator 450 may calculate the zero cross delay value as 0°. Here, the phase of 30° of the phase voltage may be a reference phase of the phase voltage.

As in FIG. 5, when a point at which the phase of the phase voltage is 60° and the zero-cross point of the phase current are the same, the load estimator 450 may calculate the zero cross delay value as 30° (60° - reference phase).

On the other hand, the load estimator 450 may check the duty ratio of the PWM signal generated by the PWM signal generator 420.

With this, the load estimator 450 may determine a load amount applied to the motor 100 using the zero cross delay value of the phase current and the duty ratio of the PWM signal.

Here, as the load amount applied to the motor 100 increases, the duty ratio of the PWM signal in proportion to the magnitude of the driving voltage also increases. As the load amount applied to the motor 100 increases, the zero cross delay value of the phase current also increases.

Accordingly, the load estimator 450 may determine the load amount applied to the motor 100 using one or more of the duty ratio of the PWM signal in proportion to the load amount and the zero cross delay value of the phase current.

Here, the load estimator 450 may determine a load amount corresponding to one or more of the duty ratio of the PWM signal and the zero cross delay value of the phase current in a look-up table stored in the memory 500 as the load amount applied to the motor 100.

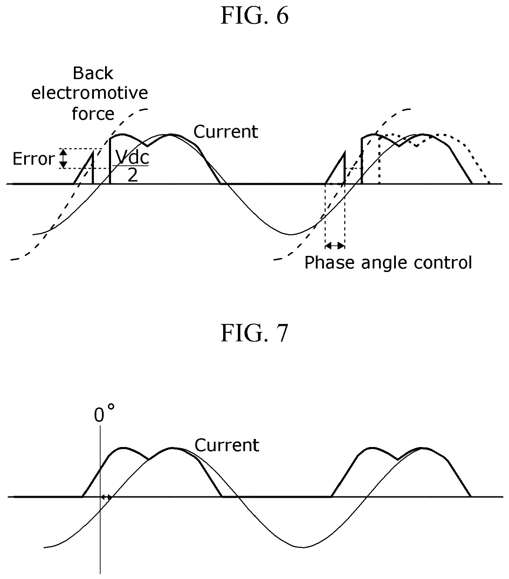

FIG. 6 is a graph illustrating reduction in error between the zero-cross point of the back electromotive force and the zero-cross point of the phase current of the motor through a phase lead operation in a voltage cycle on the basis of a lead angle of the motor according to the embodiment of the present disclosure.

Referring to FIG. 6, an error (Vdc/2) V between the zero-cross point of the back electromotive force and the zero-cross point of the phase current of the motor occurs due to floating of the phase voltage of the motor.

In this case, the error is reduced through the phase lead operation in the voltage cycle on the basis of the lead angle of the motor.

FIG. 7 is a graph illustrating phase delay after reduction in error between the zero-cross point of the back electromotive force and the zero-cross point of the phase current of the motor according to the embodiment of the present disclosure.

Referring to FIG. 7, it can be confirmed that the zero-cross point of the phase current of the motor is delayed in phase with respect to the zero-cross point of the back electromotive force after the error is reduced through the phase lead operation in the voltage cycle on the basis of the lead angle of the motor.

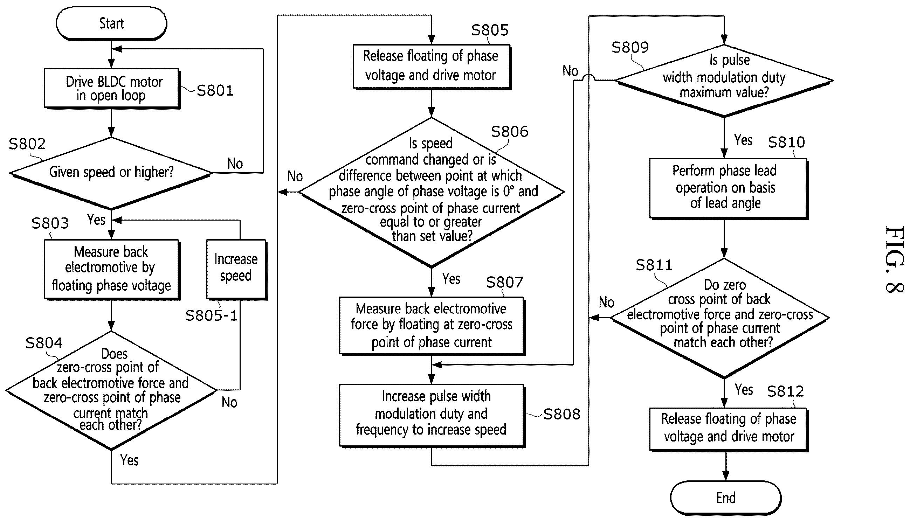

FIG. 8 is a flowchart illustrating a method for controlling floating of a motor according to the embodiment of the present disclosure.

Referring to FIGS. 3 and 8, the method for controlling floating of a motor may include S801 to S812.

First, the speed calculator 440 drives the motor 100 in the open loop (S801), and determines whether the speed of the motor is equal to or higher than the set speed (S802). This is to float the phase voltage when the speed of the motor 100 is equal to or higher than the set speed.

When the condition of S802 is satisfied, the detector 430 measures the back electromotive force by floating the phase voltage of the motor 100 (S803).

After S803, the detector 430 determines whether the zero-cross point of the back electromotive force and the zero-cross point of the phase current of the motor 100 coincide with each other (S804). This is to enable releasing the floating of the phase voltage of the motor 100 when the zero-cross point of the back electromotive force and the zero-cross point of the phase current of the motor 100 coincide with each other.

When the condition of S804 is satisfied, the speed calculator 440 releases the floating of the phase voltage of the motor 100 and drives the motor (S805). When the condition of S804 is not satisfied, after the speed calculator 440 increases the speed of the motor 100 (S805-1), the detector 430 measures the back electromotive force by floating the phase voltage of the motor 100 (S803).

After S805, the detector 430 determines whether the speed command of the motor 100 is changed or whether the difference between the point at which the phase angle of the phase voltage of the motor 100 is 0° and the zero-cross point of the phase current of the motor 100 is equal to or higher than the set value (S806). This is to determine whether a load is changed or there is an influence of an external factor.

When the condition of S806 is satisfied, the detector 430 measures the back electromotive force by floating at the zero-cross point of the phase current of the motor 100 (S807).

After S807, the PWM signal generator 420 checks the current speed of the motor 100 and the position of the rotor on the basis of the measured back electromotive force and increases the speed of the motor 100 (S808). In S808, the PWM signal generator 420 controls the pulse width modulation duty and frequency of the motor 100 to increase or decrease the speed.

After S808, the PWM signal generator 420 determines whether the pulse width modulation duty of the motor 100 is the maximum value (S809). This is to perform the phase lead operation in the voltage cycle on the basis of the lead angle of the motor 100.

When the condition of S809 is satisfied, the detector 430 reduces the error between the zero-cross point of the back electromotive force and the zero-cross point of the phase current of the motor 100 through the phase lead operation in the voltage cycle on the basis of the lead angle of the motor 100 (S810).

After S810, the detector 430 determines whether the zero-cross point of the back electromotive force and the zero-cross point of the phase current of the motor 100 coincide with each other (S811). This to release the floating of the phase voltage of the motor 100.

When the condition of S811 is satisfied, the speed calculator 440 releases the floating of the phase voltage of the motor 100 and drives the motor (S812).

The content of the specification disclosed in the summary described above does not specify essential features of the claims, and thus, the scope of the claims is not limited by matters disclosed in the content of the specification.

Although the embodiments of the present disclosure have been described in more detail with reference to the accompanying drawings, the present disclosure is not necessarily limited to these embodiments. The present disclosure can be implemented in various modified manners within the scope without departing from the technical idea of the present disclosure. Accordingly, the embodiments disclosed in the present disclosure are not intended to limit the technical idea of the present disclosure, but to describe the present disclosure, and the scope of the technical idea of the present disclosure is not limited by the embodiments. Therefore, it should be understood that the embodiments as described above are illustrative and non-limiting in all aspects. The scope of protection of the present disclosure should be interpreted by the claims, and all technical ideas within the scope of the present disclosure should be interpreted as being included in the scope of the present disclosure.

### [List of Reference Numbers]

410: PI controller
420: PWM signal generator
430: Detector
440: Speed calculator
450: Load estimator

## Claims

1. A device for controlling floating of a motor, the device comprising:
a speed calculator configured to determine whether a speed of the motor is equal to or higher than a set speed; and
a detector configured to measure a back electromotive force by floating a phase voltage of the motor when the speed of the motor is equal to or higher than the set speed and determine whether a zero-cross point of the back electromotive force and a zero-cross point of a phase current of the motor coincide with each other,
wherein the speed calculator is configured to release the floating of the phase voltage of the motor and drive the motor when the zero-cross point of the back electromotive force and the zero-cross point of the phase current of the motor coincide with each other.

2. The device for controlling floating of a motor according to claim 1, further comprising:
a PWM signal generator configured to check a current speed of the motor and a position of a rotor on the basis of a back electromotive force measured by floating at a zero-cross point of the phase current of the motor and increase or decrease the speed of the motor,
wherein the detector is configured to determine whether a speed command of the motor is changed or whether a difference between a point at which a phase angle of the phase voltage of the motor is 0° and the zero-cross point of the phase current of the motor is equal to or greater than a set value, and, when the speed command of the motor is changed or when the difference between the point at which the phase angle of the phase voltage of the motor is 0° and the zero-cross point of the phase current of the motor is equal to or greater than the set value, measure the back electromotive force by floating at the zero-cross point of the phase current of the motor,
the PWM signal generator is configured to determine whether a pulse width modulation duty of the motor is a maximum value, and
the detector is configured to reduce an error between the zero-cross point of the back electromotive force and the zero-cross point of the phase current of the motor through a phase lead operation in a voltage cycle on the basis of a lead angle of the motor when the pulse width modulation duty of the motor is the maximum value.

3. The device for controlling floating of a motor according to claim 1 or 2, wherein the detector is configured to measure the back electromotive force by floating the phase voltage of the motor after the speed calculator increases the speed of the motor when the zero-cross point of the back electromotive force and the zero-cross point of the phase current of the motor do not coincide with each other.

4. The device for controlling floating of a motor according to claim 2, wherein the PWM signal generator is configured to control a duty ratio and a frequency of a pulse width modulation (PWM) signal for the motor, thereby increase or decrease a rotation speed of the motor.

5. A method for controlling floating of a motor, the method comprising:
by a speed calculator, determining whether a speed of the motor is equal to or higher than a set speed;
by a detector, measuring a back electromotive force by floating a phase voltage of the motor when the speed of the motor is equal to or higher than the set speed;
by the detector, determining whether a zero-cross point of the back electromotive force and a zero-cross point of a phase current of the motor coincide with each other; and
by the speed calculator, releasing the floating of the phase voltage of the motor and driving the motor when the zero-cross point of the back electromotive force and the zero-cross point of the phase current of the motor coincide with each other.

6. The method for controlling floating of a motor according to claim 5, further comprising:
by the detector, determining whether a speed command of the motor is changed or whether a difference between a point at which a phase angle of the phase voltage of the motor is 0° and the zero-cross point of the phase current of the motor is equal to or greater than a set value;
by the detector, measuring a back electromotive force by floating at a zero-cross point of the phase current of the motor when the speed command of the motor is changed or when the difference between the point at which the phase angle of the phase voltage of the motor is 0° and the zero-cross point of the phase current of the motor is equal to or greater than the set value;
by a PWM signal generator, checking a current speed of the motor and a position of a rotor on the basis of the measured back electromotive force and increasing or decreasing the speed of the motor;
by the PWM signal generator, determining whether a pulse width modulation duty of the motor is a maximum value; and
by the detector, reducing an error between the zero-cross point of the back electromotive force and the zero-cross point of the phase current of the motor through a phase lead operation in a voltage cycle on the basis of a lead angle of the motor when the pulse width modulation duty of the motor is the maximum value.

7. The method for controlling floating of a motor according to claim 6, further comprising:
by the detector, determining whether the zero-cross point of the back electromotive force and the zero-cross point of the phase current of the motor coincide with each other; and
by the speed calculator, releasing the floating of the phase voltage of the motor and driving the motor when the zero-cross point of the back electromotive force and the zero-cross point of the phase current of the motor coincide with each other.

8. The method for controlling floating of a motor according to any one of claims 5 to 7, further comprising:
by the speed calculator, increasing the speed of the motor when the zero-cross point of the back electromotive force and the zero-cross point of the phase current of the motor do not coincide with each other; and
by the detector, measuring the back electromotive force by floating the phase voltage of the motor.

9. The method for controlling floating of a motor according to any one of claims 6 to 8, further comprising controlling, by a PWM signal generator, a duty ratio and a frequency of a pulse width modulation (PWM) signal for driving the motor, thereby increasing or decreasing a rotation speed of the motor.
